# EUROPÄISCHE PATENTSCHRIFT

(11) **EP 3 700 800 B1**
(45) Veröffentlichungstag und Bekanntmachung des Hinweises auf die Patenterteilung: **18.08.2021**
(21) Anmeldenummer: 18795346.8
(22) Anmeldetag: 19.10.2018
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 24.10.2017 DE 102017219014
(43) Veröffentlichungstag der Anmeldung: 02.09.2020
(73) Patentinhaber: thyssenkrupp Presta AG, 9492 Eschen (LI); thyssenkrupp AG, 45143 Essen (DE)
(72) Erfinder: RIETZLER, Oliver, A-1190 Wien (AT); KPEKPASSE, Tassoh, 9450 Altstätten (CH); DEEG, Benjamin, 6850 Dornbirn (AT)
(74) Vertreter: thyssenkrupp Intellectual Property GmbH
(86) Internationale Anmeldenummer: PCT/EP2018/078738
(87) Internationale Veröffentlichungsnummer: WO 2019/081373

(56) Entgegenhaltungen:
- DE-A1-102012 109 079
- DE-B3-102005 052 123
- DE-B3-102009 059 159
- DE-B3-102015 204 476

## Beschreibung

Die Erfindung betrifft eine Lenksäule für ein Kraftfahrzeug, beansprucht im Anspruch 1, umfassend eine Stelleinheit mit einer in einem Mantelrohr um ihre Längsachse drehbar gelagerten Lenkspindel, eine mit der Karosserie des Kraftfahrzeugs verbindbare Trageinheit, in der die Stelleinheit aufnehmbar ist, und eine Energieabsorptionseinrichtung, die ein an der Trageinheit abstützbares Übertragungselement und ein an der Stelleinheit festgelegtes Energieabsorptionselement aufweist, wobei das Übertragungselement im Crashfall unter plastischer Verformung des Energieabsorptionselements in Richtung der Längsachse relativ zum Energieabsorptionselement bewegbar ist, wobei das Energieabsorptionselement ein parallel zur Längsachse orientiertes Langloch aufweist, in den ein Aufweitungsteil des Übertragungselements eingreift, das Übermaß zur Breite des Langlochs hat.

Über das am bezüglich der Fahrtrichtung hinteren Ende der Lenkspindel angebrachte Lenkrad kann vom Fahrer als Lenkbefehl ein Lenkmoment zur Lenkung des Fahrzeugs eingebracht werden. Das Mantelrohr bildet zusammen mit der darin drehbar gelagerten Lenkspindel die Stelleinheit, die an der Fahrzeug-Karosserie ist in einer Trageinheit gehalten ist, beispielsweise in einer Konsoleneinheit. Die Stelleinheit kann im Betrieb positionsfest mit der Trageinheit verbunden sein, oder zur Einstellung der Lenkradposition relativ zur fest mit der Fahrzeugkarosserie verbundenen Trageinheit in Höhenrichtung und/oder in Längsrichtung, dies entspricht der Richtung der Längsachse, in Lösestellung einer Verstelleinrichtung verstellbar und in Fixierstellung lösbar fixierbar gestaltet sein.

Zur Verbesserung der Insassensicherheit bei einem Fahrzeugzusammenstoß, dem sogenannten Crashfall, ist in einer gattungsgemäßen Lenksäule eine sogenannte Crasheinrichtung mit einer Energieabsorptionseinrichtung vorgesehen. Eine Crasheinrichtung wird dadurch realisiert, dass die Stelleinheit, auch in Fixierstellung relativ zur karosseriefesten Trageinheit in Längsrichtung nach vorn bewegbar ist, wenn der Körper des Fahrers bei einem Frontalzusammenstoß mit hoher Geschwindigkeit auf das Lenkrad aufprallt, wobei eine große Kraft auf das Lenkrad ausgeübt wird, die einen Grenzwert überschreitet, der nur im Crashfall auftritt. Um dabei für eine kontrollierte Abbremsung des auf das Lenkrad auftreffenden Körpers zu sorgen, ist zwischen der Manteleinheit und der Trageinheit, die im Normalbetrieb üblicherweise durch die Spanneinrichtung einer Verstelleinrichtung lösbar miteinander fixiert sind, im Crashfall jedoch unter Überwindung der Fixierkraft relativ zueinander bewegt werden, eine Energieabsorptionseinrichtung eingekoppelt. Diese setzt die zwischen Manteleinheit und Stelleinheit eingeleitete kinetische Energie über einen vorgegebenen Deformationsweg in plastische Verformung eines Energieabsorptionselements um, beispielsweise durch Aufweiten eines Langloches oder Schlitzes, Aufreißen eines Reißelements, Verbiegen eines Biegeelements, oder Kombinationen von verschiedenen Verformungen.

Bei einer gattungsgemäßen Lenksäule, wie beispielsweise aus der DE 10 2005 052 123 B3 bekannt, ist ein Energieabsorptionselement, welches ein parallel zur Längsachse erstrecktes Langloch aufweist, an der Stelleinheit festgelegt. Ein an der Trageinheit abgestütztes Übertragungselement greift mit einem Aufweitungsteil in das Langloch des an der Stelleinheit befestigten Energieabsorptionselements ein. Im Crashfall wird dieses Aufweitungsteil, welches breiter ist als das Langloch, im Langloch entlangbewegt und weitet dieses unter plastischer Verformung über dessen Länge, die dem Deformationsweg entspricht, unter Energieabsorption auf. Erfolgt die Befestigung des Energieabsorptionselements durch Verschweißen, kann Wärmeverzug auftreten, wodurch die Energieabsorptionscharakteristik beeinträchtigt werden kann.

Eine Lenksäule der eingangs genannten Art ist beispielsweise in der DE 10 2012 109079 A1 beschrieben. Dabei können die vorgenannten Probleme ebenfalls auftreten.

Angesichts der vorangehend erläuterten Problematik ist es eine Aufgabe der vorliegenden Erfindung, eine verbesserte Anbringung des Energieabsorptionselements an der Stelleinheit anzugeben.

### Darstellung der Erfindung

Zur Lösung der vorgenannten Problematik wird erfindungsgemäß vorgeschlagen, dass das Energieabsorptionselement mit der Stelleinheit über mindestens ein Befestigungselement verbunden ist, das in Befestigungsausnehmungen des Energieabsorptionselements und des Mantelrohrs eingreift wobei das Energieabsorptionselement mindestens ein Formschlusselement aufweist, welches in eine korrespondierende Formschlussausnehmung in dem Mantelrohr formschlüssig eingreift.

Erfindungsgemäß ist mindestens ein Befestigungselement vorgesehen, welches bevorzugt zunächst als separates Verbindungselement zur Verfügung gestellt werden kann, und zur Fixierung in korrespondierende Befestigungsausnehmungen in dem Energieabsorptionselement und dem Mantelrohr eingefügt und festgelegt wird. Die Befestigungsausnehmungen können beispielsweise durch überlappende, bevorzugt deckungsgleiche Befestigungsöffnungen gebildet werden, durch die ein stift- oder bolzenförmiges Befestigungselement quer zur Längsachse hindurchgeführt wird. Bevorzugt wird ein Befestigungselement formschlüssig in die Befestigungsausnehmungen, beispielsweise Befestigungsöffnungen, eingepasst, so dass es eine in Längsrichtung spielfreie Verbindung zwischen dem Energieabsorptionselement und der Stelleinheit erzeugt.

Alternativ kann es bevorzugt auch vorgesehen sein,dass die Befestigungselemente als Abschnitt des Energieabsorptionselement oder des Mantelsrohrs ausgebildet sind, wobei diese Abschnitte mittels einer plastischen Verformung mit den Befestigungsausnehmungen in eingriff gebracht werden. Dieser Abschnitt kann bevorzugt als Laschen mit einem freien Ende ausgebildet sein.

Weiterhin weist das Energieabsorptionselement erfindungsgemäß mindestens ein Formschlusselement auf welches in eine korrespondierende Formschlussausnehmung in dem Mantelrohr formschlüssig eingreift. Ein Formschlusselement kann beispielsweise einen Vorsprung aufweisen, beispielsweise einen vorstehenden Randabschnitt eines Blechformteils, der von außen, radial auf die Längsachse zu, in eine korrespondierende Öffnung oder Ausnehmung in dem Mantelrohr formschlüssig eingesetzt wird. Durch den Formschluss wird das Energieabsorptionselement bei der Montage parallel und quer zur Längsachse positioniert und fixiert, so dass die geforderte exakte Ausrichtung und die Einbringung der Befestigungselemente erleichtert wird. Außerdem kann der Formschluss die im Crashfall auftretenden Kräfte in Richtung der Längsachse aufnehmen. Entsprechend müssen die erfindungsgemäßen Befestigungselemente im Wesentlichen nur für die radiale Festlegung des Energieabsorptionselements am Mantelrohr sorgen. Dadurch wird die Sicherheit der Befestigung erhöht, und es können kleinere Befestigungselemente eingesetzt werden, um den Bauraum zu optimieren und die Fertigung zu vereinfachen.

Das Energieabsorptionselement weist ein parallel zur Längsachse orientiertes Langloch auf, in den ein Aufweitungsteil des Übertragungselements eingreift, das Übermaß zur Breite des Langlochs hat. Ein derartiges Energieabsorptionselement, bei dem die aktive Deformationslänge des Verformungsabschnitts durch die Länge des Langlochs in Richtung der Längsachse vorgegeben wird, ist beispielsweise aus der eingangs genannten DE 10 2005 052 123 B3 bekannt. Erfindungsgemäß erfolgt die Festlegung an dem Mantelrohr mittels Befestigungselementen. Dabei ist es besonders vorteilhaft, dass das Langloch radialen Abstand zum Mantelrohr hat, und zumindest eine Befestigungsausnehmung in einer am Mantelrohr anliegenden Befestigungslasche ausgebildet ist. Durch das relativ zur Außenfläche des Mantelrohrs beabstandete Langloch kann das Aufweitungsteil vollständig hindurchgreifen, so dass es sich im Crashfall in Längsrichtung sicher geführt durch das Langloch bewegt und dieses plastisch aufweitet. Die Befestigungslaschen können als flache Abschnitte ausgebildet sein, die jeweils ein oder mehrere Befestigungsausnehmungen aufweisen, beispielsweise Befestigungslöcher. Von dem Langloch aus gesehen sind die Befestigungslaschen in Richtung auf das Mantelrohr zu versetzt, so dass sie an der Außenfläche des Mantelrohrs anliegen, während der Verformungsabschnitt mit dem Langloch radialen Abstand zum Mantelrohr hat. Entsprechend haben die Befestigungslaschen radialen Abstand bezüglich der Längsachse zum Langloch. Vorzugsweise sind die Befestigungslaschen mit Abstand zum Langloch in Richtung der Längsachse angeordnet, beispielsweise in Längsrichtung vor und hinter dem Verformungsabschnitt. Die Befestigungslaschen können auch seitlich, quer zur Längsachse vorstehen, so dass die darin ausgebildeten Befestigungsausnehmungen Abstand quer zur Längsachse von dem Langloch haben.

### Bevorzugt werden mehrere Befestigungselemente eingesetzt.

Ein Vorteil ist, dass die Befestigungsausnehmungen durch spanende oder nichtspanende Bearbeitungsverfahren mit der erforderlichen Genauigkeit in dem Energieabsorptionselement und dem Mantelrohr ausgebildet werden können, beispielsweise durch Stanzungen oder Bohrungen, und erst in einem nachfolgenden Fertigungsschritt die Verbindung durch Einfügen des oder der Befestigungselemente erzeugt wird. Dadurch wird sichergestellt, dass die für die Funktion maßgebliche Form des Energieabsorptionselements bei der Festlegung an der Stelleinheit nicht negativ beeinflusst wird.

Ein Befestigungselement kann als plastisch verformbares, unlösbares Verbindungselement ausgebildet sein, beispielsweise als Niet. Für eine Nietverbindung kann der Niet in an sich bekannten Weise in die Befestigungsausnehmung eingefügt und durch plastische Verformung vernietet werden, so dass eine formschlüssige, unlösbare Verbindung erzeugt wird. Bevorzugt kann der Niet im Wesentlichen quer zur Längsachse, in radialer Richtung eingesetzt werden. Der oder die Nieten legen das Energieabsorptionselement in Quer- und Längsrichtung an dem Mantelrohr fest. Die Nietköpfe können bevorzugt versenkt ausgebildet sein. Hierzu wird im Bereich der Befestigungsausnehmung eine Vertiefung eingeformt, welche den Nietkopf bündig aufnimmt. Dadurch, dass der Niet nicht aus der Vertiefung vorsteht, bleibt im Bereich der Vernietung eine eben durchgehende Oberfläche erhalten.

Mindestens zwei Befestigungselemente können auf einer Linie parallel zur Längsachse angeordnet sein. Dadurch erfolgt zum einen eine sichere Fixierung des Energieabsorptionselement an dem Mantelrohr, zum anderen können durch zwei oder mehr Befestigungselemente die im Crashfall auf das Energieabsorptionselement wirkenden axialen Kräfte sicher aufgenommen werden.

Mindestens zwei Befestigungselemente können auf einer Linie parallel zur Längsachse angeordnet sein. Dadurch kann eine belastbare Befestigung in Längsrichtung realisiert werden.

Eine vorteilhafte Ausführung der Erfindung sieht vor, dass die Befestigungselemente an zumindest einem Befestigungsabschnitt des Energieabsorptionselements außerhalb eines Verformungsabschnitts angeordnet sind, vorzugsweise mit Abstand in Richtung der Längsachse und/oder quer zur Längsachse. Der Verformungsabschnitt bildet den im Crashfall verformbaren Teil des Energieabsorptionselements. Beispielsweise kann dies der Längsabschnitt sein, in dem sich ein aufweitbares Langloch erstreckt. Durch die außerhalb des Verformungsabschnitts angeordneten Befestigungselemente kann die Verformung im Crashfall ungestört erfolgen, und die Verbindung zwischen Energieabsorptionselement und Mantelrohr wird nicht beschädigt. Außerdem kann die Anzahl und Anordnung der Befestigungsabschnitte an die im Crashfall zu erwartenden hohen Kräfte angepasst werden, wobei die Gestaltungsfreiheit bei der Konstruktion nicht durch die Abmessungen des Verformungsabschnitts beschränkt wird.

Die Befestigungsabschnitte in Form von Befestigungslaschen können so an dem Energieabsorptionselement positioniert sein, dass sie zur Montage durch Einfügen der Befestigungselemente gut zugänglich sind, der Verformungsabschnitt bei der Montage möglichst nicht in schädlicher Weise deformiert oder verzogen wird, und dass die im Crashfall auftretenden hohen Belastungen der Verbindung sicher aufgenommen werden.

Bevorzugt kann das Energieabsorptionselement als einstückiges Stanz-Biege-Formteil ausgebildet werden, beispielsweise aus Stahlblech. Dadurch kann beispielsweise ein Verformungsabschnitt mit Langloch, und sich daran stufenförmig abgewinkelten anschließenden Befestigungslaschen mit Befestigungslöchern mit den geforderten Toleranzen als Blechformteil durch Kaltumformung rationell gefertigt werden.

Es kann vorgesehen sein, dass das Übertragungselement und das Energieabsorptionselement über ein Sollbruchelement miteinander verbunden sind. Das Sollbruchelement sorgt dafür, dass bei den im Normalbetrieb zu erwartenden Belastungen die Energieabsorptionseinrichtung nicht anspricht, und auch langfristig keine Beeinträchtigung der Energieabsorptionscharakteristik erfolgt. Ausschließlich durch die im Crashfall auftretende hohe Kraftspitze wird das Sollbruchelement durchtrennt, und gibt die relative Bewegung von Übertragungselement und Energieabsorptionselement zur Energieabsorption frei. Das Sollbruchelement kann beispielsweise durch einen Scherstift oder Scherniet realisiert werden, der in eine durch das Übertragungselement und das Energieabsorptionselement durchgehende Querbohrung eingesetzt ist, um im Crashfall in Längsrichtung abgeschert wird.

Das Übertragungselement kann ein Eingriffsteil aufweisen, welches mit einem an der Trageinheit abstützbaren Arretierteil lösbar verbindbar ist. Das Eingriffsteil kann beispielsweise eine Zahnplatte aufweisen, welche in Eingriff bringbar ist mit einer korrespondierenden Gegenverzahnung an dem Arretierteil, wodurch eine lösbare, in Richtung der Längsachse wirksame Formschlussverbindung erzeugt wird. Dadurch, dass das Arretierteil von dem Eingriffsteil gelöst wird, indem beispielsweise die Verzahnungen außer Eingriff gebracht werden, so dass die Stelleinheit samt Energieabsorptionseinrichtung in Richtung der Längsachse relativ zur Trageinheit verstellt werden kann, so dass eine Längsverstellung der Lenksäule realisiert wird.

Um eine Verstellbarkeit der Stelleinheit relativ zur Trageinheit zu ermöglichen, kann vorgesehen sein, dass an der Trageinheit eine Spanneinrichtung angeordnet ist, die in Fixierstellung die Stelleinheit relativ zur Trageinheit zumindest in Längsrichtung festlegt und die in Freigabestellung eine Verstellung der Stelleinheit relativ zur Trageinheit zumindest in Längsrichtung freigibt. Vorteilhaft ist es dabei, dass die Spanneinrichtung mit dem Arretierteil zusammenwirkt, welches in Fixierstellung mit dem Eingriffsteil verbunden ist und in Freigabestellung von dem Eingriffsteil gelöst ist. Dadurch kann die Lenksäule in Längs- und/oder Höhenrichtung verstellbar ausgestaltet werden. Durch die erfindungsgemäße Befestigung des Energieabsorptionselements kann eine optimierte Anpassung an die baulichen Gegebenheiten erfolgen, wobei ein hoher Sicherheitsstandard gewährleistet ist.

Die Erfindung umfasst weiterhin eine Stelleinheit für eine Lenksäule eines Kraftfahrzeugs, beansprucht im Anspruch 10, mit einer in einem Mantelrohr um ihre Längsachse drehbar gelagerten Lenkspindel, und einer mit dem Mantelrohr verbundenen Energieabsorptionseinrichtung, die ein an dem Mantelrohr festgelegtes Energieabsorptionselement aufweist, wobei das Energieabsorptionselement ein parallel zur Längsachse (L) orientiertes Langloch aufweist, wobei das Energieabsorptionselement mit dem Mantelrohr über mindestens ein Befestigungselement verbunden ist, das formschlüssig in Befestigungsausnehmungen des Energieabsorptionselements und des Mantelrohrs eingreift.

Die Stelleinheit kann gemäß den vorangehend für die Lenksäule beschriebenen Merkmalen ausgestaltet sein, wodurch bei der Verwendung in einer Lenksäule die geschilderten Vorteile erreicht werden können.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einem teilweise auseinander gezogenem Zustand,
- Figur 3: die Stelleinheit der Lenksäule gemäß Figur 1 in einer schematischen perspektivischen Ansicht,
- Figur 4: die Stelleinheit gemäß Figur 3 in teilweise auseinander gezogenem Zustand,
- Figur 5: die Stelleinheit gemäß Figur 4 in weiter auseinander gezogenem Zustand,
- Figur 6: ein Längsschnitt durch die Lenksäule gemäß Figur 1.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

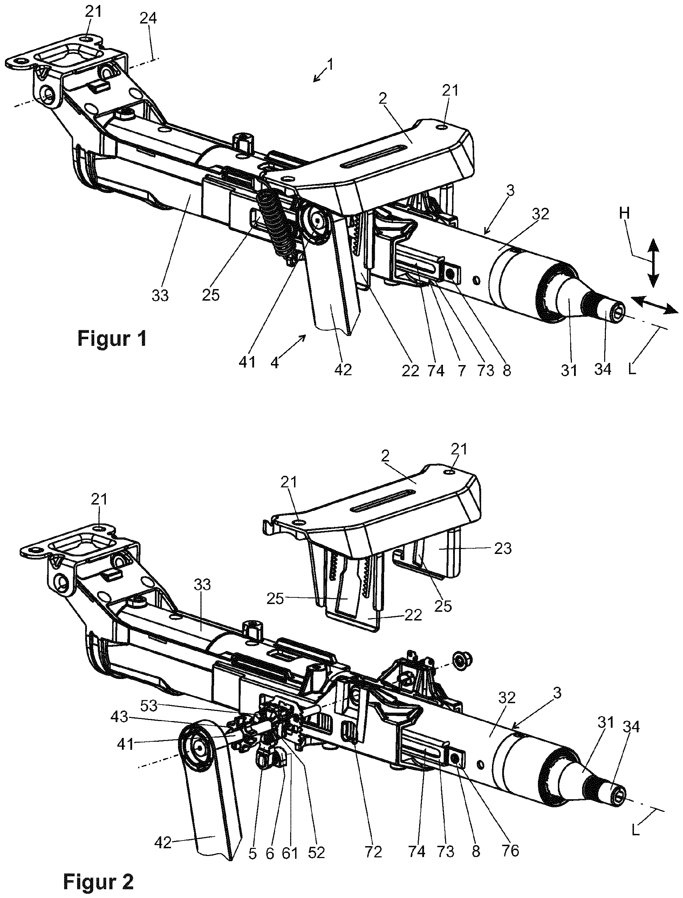

Figuren 1 und 2 zeigen in perspektivischer Ansicht schräg von hinten - bezogen auf die Fahrtrichtung eines hier nicht gezeigten Kraftfahrzeugs - eine Lenksäule 1, die eine Trageinheit 2 aufweist, mit Befestigungsmitteln 21 zur Verbindung mit der Karosserie des Kraftfahrzeugs, beispielsweise wie dargestellt Befestigungsöffnungen. Von der Trageinheit 2 erstrecken sich zwei einander gegenüberliegende Seitenwangen 22 und 23 nach unten.

Eine Stelleinheit 3 umfasst eine Lenkspindel 31, die um ihre Längsachse L drehbar in einem inneren Mantelrohr 32 gelagert ist. Das Mantelrohr 32 in Richtung der Längsachse L längsverschiebbar in einer äußeren Manteleinheit 33 aufgenommen, wie schematisch mit einem Doppelpfeil angedeutet ist. Am bezogen auf die Fahrtrichtung hinterem Ende weist die Lenkspindel 31 einen Befestigungsabschnitt 34 zur drehfesten Anbringung eines nicht dargestellten Lenkrads auf.

Die Manteleinheit 33 ist um eine Schwenkachse 24, die quer zur Längsachse L liegt, an der Trageinheit 2 schwenkbar gelagert. Dadurch kann die Stelleinheit 3 zur Einstellung der Höhenposition des Lenkrads zwischen den Seitenwangen 22 und 23 relativ zur Trageinheit 2 in Höhenrichtung H auf und ab bewegt werden, wie mit einem Doppelpfeil angedeutet.

Eine Spanneinrichtung 4 ist ausgebildet, um die Stelleinheit 3 wahlweise in Fixierstellung relativ zur Trageinheit 2 zu verspannen oder in Freigabestellung eine Verstellung in Richtung der Längsachse L und/oder in Höhenrichtung H zu ermöglichen.

Die Spanneinrichtung 4 weist als Betätigungselement einen Spannbolzen 41 auf, der sich quer zur Längsachse L durch Langlöcher 25 in den einander gegenüberliegenden Seitenwangen 22 und 23 erstreckt. Die Langlöcher 25 sind in Höhenrichtung H ausgedehnt. An einem Ende des Spannbolzens 41 ist ein Betätigungshebel 42 drehfest abgebracht, während das andere Ende drehbar, aber zugfest an der Seitenwange 23 gelagert ist.

Mit dem Betätigungshebel 42 ist eine Hubscheibe 43 drehfest verbunden, welche als Nockenscheibe ausgebildet ist mit in Achsrichtung des Spannbolzens 41, d.h. der Spannachse S stirnseitig axial von außen gegen die Seitenwange 22 vorstehenden Nocken.

Auf dem Spannbolzen 41 ist zwischen der Hubscheibe 43 und der Außenseite der Seitenwange 22 ein Fixierelement 5 angeordnet. Eine Öffnung 52 erstreckt sich in Richtung der Spannachse S durch das Fixierelement 5 hindurch, durch die, wie in Figur 2 erkennbar, der Spannbolzen 41 hindurchgeführt ist.

Das Fixierelement 5 weist eine als Nockenscheibe ausgebildete Druckscheibe 53 auf. Diese hat eine kreisscheibenförmige Grundform und ist koaxial zur Öffnung 52 angeordnet. Auf ihrer axialen Stirnseite, die im zusammengebauten Zustand der Hubscheibe 43 zugewandt ist, weist die Druckscheibe 53 axial vorstehende Nocken auf. Die Nocken wirken mit den korrespondierenden Nocken der an dem Betätigungshebel 42 angebrachten Hubscheibe 43 zur Bildung eines Hubgetriebes zusammen. Zur Fixierung wird der Spannbolzen 41 mittels des Betätigungshebels 42 oder alternativ mittels eines nicht dargestellten motorischen Antriebs um seine Achse gedreht. Das Fixierelement 5 ist bezüglich Drehung fest an der Seitenwange 22 gehaltert. Dadurch führen die Hubscheibe 43 und die Druckscheibe 53 einen relativen Hub in axialer Richtung des Spannbolzens 41 aus, so dass die Druckscheibe 53 und damit das Fixierelement 5 quer zur Längsachse L von außen gegen die Seitenwange 22 angepresst wird. Dadurch wird die Manteleinheit 33 und damit die Stelleinheit 3 zwischen den Seitenwangen 22 und 23 eingespannt bzw. eingeklemmt.

An der Stelleinheit 3 ist eine Energieabsorptionseinrichtung 7 angebracht, die ein Übertragungselement 71 aufweist, welches eine Zahnplatte 72 mit einer außenliegenden Verzahnung, die quer zur Längsachse L liegende Zähne hat.

An dem Fixierelement 5 ist ein Arretierteil 6 in Form eines Zahnsteins angebracht, welcher auf seiner gegen die Stelleinheit 3 gerichteten Seite eine Verzahnung 61 aufweist. Das Arretierteil 6 ragt von außen in radialer Richtung durch das Langloch 25 und greift mit seiner Verzahnung formschlüssig in die korrespondierende Verzahnung der Zahnplatte 72 am Übertragungselement 71 der Energieabsorptionseinrichtung 7 ein. Der Eingriff erfolgt beim Verspannen der Spanneinrichtung 4 in Richtung der Spannachse S. Dadurch wird eine formschlüssige Fixierung des Mantelrohrs 32 in Längsrichtung L relativ zum Fixierelement 5 bewirkt, welches sich seinerseits in Längsrichtung L an der Seitenwange 22 der Trageinheit 2 abstützt, so dass das Mantelrohr 32 in Richtung der Längsachse L relativ zur Trageinheit 2 arretiert ist. Durch das Arretierteil 6 wird das Übertragungselement 7 der Energieabsorptionseinrichtung 7 in Richtung der Längsachse L an dem Tragelement 2 festgelegt.

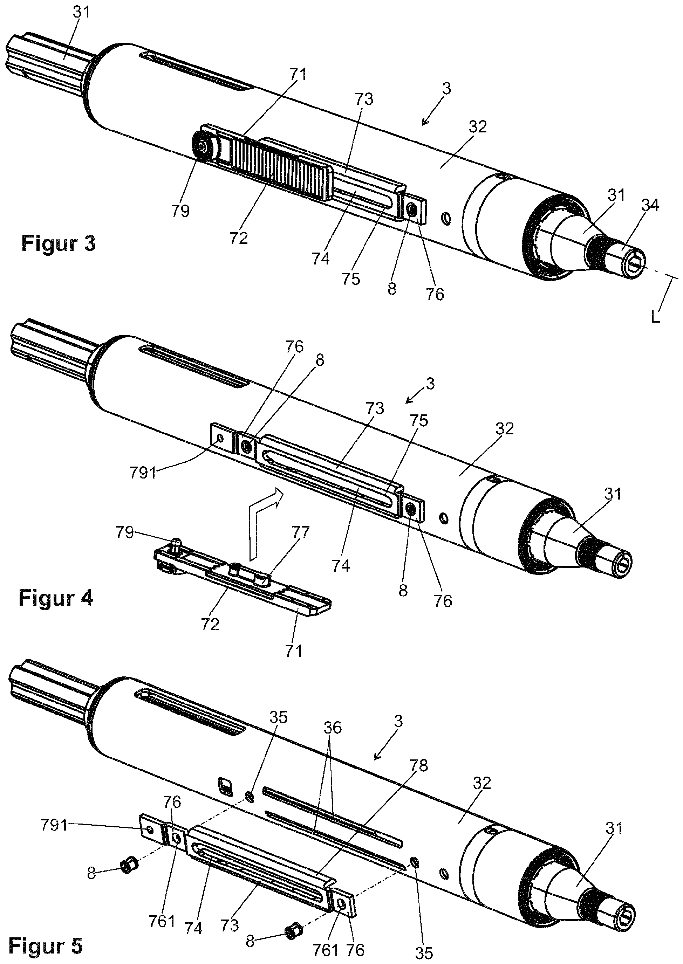

Die Energieabsorptionseinrichtung 7 ist im Detail in Figuren 3 bis 6 erläutert.

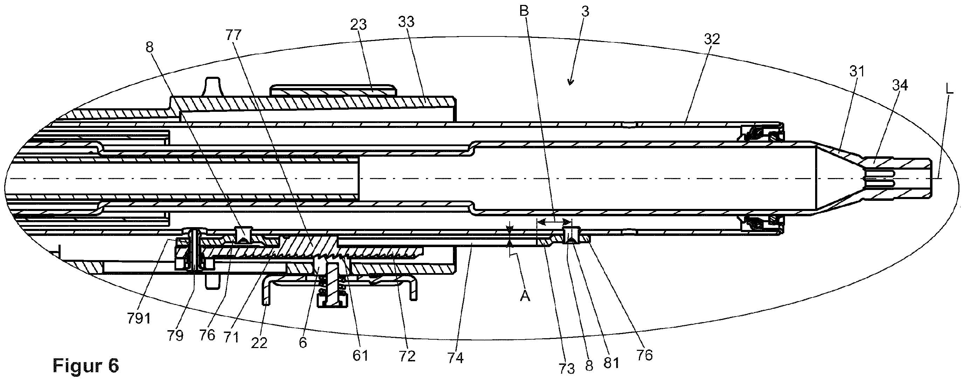

Die Energieabsorptionseinrichtung 7 weist ein Energieabsorptionselement 73 auf, welches auf seiner Außenseite ein Langloch 74 aufweist, das sich in Achsrichtung parallel zur Längsachse L erstreckt. Das Langloch 74 ist in einem Verformungsabschnitt 75 des Energieabsorptionselements 7 ausgebildet, der (radialen) Abstand A (siehe Figur 6) zur Außenfläche des Mantelrohrs 32 hat. An seinen in Richtung der Längsachse L liegenden Enden sind Befestigungsabschnitte in Form von Befestigungslaschen 76 angebracht, welche jeweils eine radial durchgehende Öffnung 761 als Befestigungsausnehmung aufweisen. Die Befestigungslaschen 76 erstrecken sich parallel zur Außenfläche des Mantelrohrs 32 und sind am Verformungsabschnitt 75 stufenförmig abgewinkelt angebracht, so dass sie in dem montierten Zustand gemäß Figuren 3 und 4 außen an dem Mantelrohr 32 aufliegen.

Die Befestigungslaschen 76 stehen von dem Verformungsabschnitt 75 in Richtung der Längsachse L vor, und die darin ausgebildeten Öffnungen 761 haben Abstand zum Langloch 74, liegen also außerhalb des Verformungsabschnitts 75.

Deckungsgleich zu den Öffnungen 761 sind in dem Mantelrohr 32 korrespondierende Öffnungen 35 eingebracht. Zur Befestigung ist jeweils ein als Befestigungselement dienender Niet 8 durch die Öffnungen 761 und 35 hindurchgeführt und vernietet. Dadurch wird eine unlösbare Verbindung des Energieabsorptionselements 73 mit der Stelleinheit 3 erzeugt.

Die plastische Verformung zur Vernietung der Nieten 8 kann bevorzugt dermaßen erfolgen, dass ein bündiger Abschluss mit der Außenseite der Befestigungslasche 76 erreicht wird, beispielsweise durch eine Einformung 81, wie gut in der Schnittdarstellung von Figur 6 erkennbar.

Das Energieabsorptionselement 73 weist weiterhin Formschlusselemente 78 auf, die formschlüssig in korrespondierende, im gezeigten Beispiel schlitzartige Formschlussöffnungen 36 im Mantelrohr 32 eingreifen.

Durch die nach außen vorstehenden Befestigungslaschen 76 erhält das Energieabsorptionselement 73 bezüglich der Befestigung am Mantelrohr 32 eine flanschartige Struktur. Dadurch, dass der Verformungsabschnitt 75 mit dem Langloch 74 in Richtung der Längsachse L einen Abstand B (siehe Figur 6) zu den Nieten 8 hat, ist eine besonders günstige Kraftaufnahme bezüglich der im Crashfall in den Verformungsabschnitt 75 eingeleiteten hohen Kräfte gewährleistet.

Das Übertragungselement 71 weist auf seiner gegen das Mantelrohr 31 gerichteten Innenseite ein vorstehendes als Verformungsorgan ausgebildetes Aufweitungsteil 77 auf, welches in montiertem Zustand der Figur 3 in das Langloch 75 eintaucht. Das Aufweitungsteil 77 hat Übermaß zur Breite des Langlochs (quer zur Längsachse L gemessen), so dass eine relative Bewegung des Übertragungselements 71 zum Energieabsorptionselement 73 im Crashfall eine plastischen Aufweitung des Langlochs 75 bewirkt, wodurch im Verformungsabschnitt 75 entlang des durch die Länge des Langlochs 75 definierten Verformungswegs kinetische Energie absorbiert wird.

Das Übertragungselement 71 weist ein Sollbruchelement in Form eines Scherstifts 79 auf, der in montiertem Betriebszustand in eine korrespondierende Öffnung 791 in dem Energieabsorptionsteil 73 formschlüssig eingreift. Der Scherstift 79 kann aus einem definiert durchtrennbaren Material bestehen, beispielsweise Aluminium oder Kunststoff, und wird durch die im Crashfall auftretende hohe Kraftspitze durchtrennt, so dass die relative Bewegung von Übertragungselement 71 und Energieabsorptionselement zur Energieabsorption 73 entlang des Langlochs 74 freigegeben wird.

In der Schnittansicht der Figur 6 ist gut erkennbar, wie das an der Seitenwange 22 abgestützte Arretierteil 6 in die Verzahnung der Zahnplatte 72 eingreift. Es ist ebenfalls deutlich erkennbar, dass das Energieabsorptionselement 73 im Bereich des Langlochs 74 einen Abstand A zur Außenseite des Mantelrohrs 32 hat, während die Befestigungslaschen 76 auf dem Mantelrohr 32 außen aufliegen.

Das Energieabsorptionselement 73 kann durch Pressen, Stanzen und Biegen rationell als einstückiges Blechformteil gefertigt werden, vorzugsweise aus Stahlblech.

### Bezugszeichenliste

- 1: Lenksäule
- 2: Trageinheit
- 21: Befestigungsmittel
- 22, 23: Seitenwangen
- 24: Schwenkachse
- 25: Langloch
- 3: Stelleinheit
- 31: Lenkspindel
- 32: Mantelrohr
- 33: Manteleinheit
- 34: Befestigungsabschnitt
- 35: Öffnung
- 36: Formschlussöffnung
- 4: Spanneinrichtung
- 41: Spannbolzen
- 42: Betätigungshebel
- 43: Hubscheibe
- 5: Fixierelement
- 52: Öffnung
- 53: Druckscheibe
- 6: Arretierteil (Zahnstein)
- 61: Verzahnung
- 7: Energieabsorptionseinrichtung
- 71: Übertragungselement
- 72: Zahnplatte
- 73: Energieabsorptionselement
- 74: Langloch
- 75: Verformungsabschnitt
- 76: Befestigungslasche
- 761: Öffnung
- 77: Aufweitungsteil
- 78: Formschlusselement
- 79: Scherstift
- 791: Öffnung
- 8: Niet
- 81: Einformung
- L: Längsachse
- H: Höhenrichtung
- S: Spannachse
- A, B: Abstand

## Patentansprüche

1. Lenksäule (1) für ein Kraftfahrzeug, umfassend
eine Stelleinheit (3) mit einer in einem Mantelrohr (32) um ihre Längsachse (L) drehbar gelagerten Lenkspindel (31),
eine mit der Karosserie des Kraftfahrzeugs verbindbare Trageinheit (2), in der die Stelleinheit (3) aufnehmbar ist, und
eine Energieabsorptionseinrichtung (7), die ein an der Trageinheit (2) abstützbares Übertragungselement (71) und ein an der Stelleinheit (31) festgelegtes Energieabsorptionselement (73) aufweist, wobei das Übertragungselement (71) im Crashfall unter plastischer Verformung des Energieabsorptionselements (73) in Richtung der Längsachse (L) relativ zum Energieabsorptionselement (73) bewegbar ist, wobei das Energieabsorptionselement (73) ein parallel zur Längsachse (L) orientiertes Langloch (75) aufweist, in den ein Aufweitungsteil (77) des Übertragungselements (71) eingreift, das Übermaß zur Breite des Langlochs (75) hat,
**dadurch gekennzeichnet,**
**dass** das Energieabsorptionselement (73) mit der Stelleinheit (3) über mindestens ein Befestigungselement (8) verbunden ist, das in Befestigungsausnehmungen (761, 35) des Energieabsorptionselements (73) und des Mantelrohrs (32) eingreift,
wobei das Energieabsorptionselement (73) mindestens ein Formschlusselement (78) aufweist, welches in eine korrespondierende Formschlussausnehmung (36) in dem Mantelrohr (32) formschlüssig eingreift.

2. Lenksäule nach Anspruch 1, **dadurch gekennzeichnet, dass** das Befestigungselement (8) als plastisch verformbares, unlösbares Verbindungselement ausgebildet ist.

3. Lenksäule nach einem der vorangehenden Ansprüche, **dadurch gekennzeichnet, dass** mindestens zwei Befestigungselemente (8) auf einer Linie parallel zur Längsachse (L) angeordnet sind.

4. Lenksäule nach einem der vorangehenden Ansprüche, **dadurch gekennzeichnet, dass** die Befestigungselemente (8) an einem Befestigungsabschnitt (76) des Energieabsorptionselements (73) außerhalb eines Verformungsabschnitts (75) angeordnet sind.

5. Lenksäule nacheinem der vorangehenden Ansprüche , **dadurch gekennzeichnet, dass** das Langloch (75) radialen Abstand zum Mantelrohr (32) hat, und zumindest eine Befestigungsausnehmung (751) in einer am Mantelrohr (32) anliegenden Befestigungslasche (76) ausgebildet ist.

6. Lenksäule nach einem der vorangehenden Ansprüche, **dadurch gekennzeichnet, dass** das Übertragungselement (71) und das Energieabsorptionselement (73) über ein Sollbruchelement (79) miteinander verbunden sind.

7. Lenksäule nach einem der vorangehenden Ansprüche, **dadurch gekennzeichnet, dass** das Übertragungselement (71) ein Eingriffsteil (72) aufweist, welches mit einem an der Trageinheit abstützbaren Arretierteil (6) lösbar verbindbar ist.

8. Lenksäule nach einem der vorangehenden Ansprüche, **dadurch gekennzeichnet, dass** an der Trageinheit (2) eine Spanneinrichtung (4) angeordnet ist, die in Fixierstellung die Stelleinheit (3) relativ zur Trageinheit (3) zumindest in Längsrichtung festlegt und die in Freigabestellung eine Verstellung der Stelleinheit (3) relativ zur Trageinheit (2) zumindest in Längsrichtung freigibt.

9. Lenksäule nach Anspruch 8, **dadurch gekennzeichnet, dass** die Spanneinrichtung (4) mit dem Arretierteil (6) zusammenwirkt, welches in Fixierstellung mit dem Eingriffsteil (72) verbunden ist und in Freigabestellung von dem Eingriffsteil (72) gelöst ist.

10. Stelleinheit (3) für eine Lenksäule (1) eines Kraftfahrzeugs, mit einer in einem Mantelrohr (32) um ihre Längsachse (L) drehbar gelagerten Lenkspindel (31), und einer mit dem Mantelrohr (32) verbundenen Energieabsorptionseinrichtung (7), die ein an dem Mantelrohr (32) festgelegtes Energieabsorptionselement (73) aufweist, wobei das Energieabsorptionselement (73) ein parallel zur Längsachse (L) orientiertes Langloch (75) aufweist,
**dadurch gekennzeichnet,**
**dass** das Energieabsorptionselement (73) mit dem Mantelrohr (32) über mindestens ein Befestigungselement (8) verbunden ist, das formschlüssig in Befestigungsausnehmungen (761, 36) des Energieabsorptionselements (73) und des Mantelrohrs (32) eingreift,
wobei das Energieabsorptionselement (73) mindestens ein Formschlusselement (78) aufweist, welches in eine korrespondierende Formschlussausnehmung (36) in dem Mantelrohr (32) formschlüssig eingreift.

## Claims

1. A steering column (1) for a motor vehicle, comprising
an actuating unit (3) with a steering spindle (31) which is mounted such that it can be rotated about its longitudinal axis (L) in a casing tube (32),
a support unit (2) which can be connected to the body of the motor vehicle and in which the actuating unit (3) can be accommodated, and
an energy absorbing device (7), which has a transmission element (71) that can be supported on the support unit (2) and an energy absorbing element (73) that is secured to the actuating unit (3), wherein, in the event of a crash, the transmission element (71) can be moved in the direction of the longitudinal axis (L) relative to the energy absorbing element (73), with plastic deformation of the energy absorbing element (73), wherein the energy absorbing element (73) has an elongated hole (75) which is oriented parallel to the longitudinal axis (L) and into which an expansion part (77) of the transmission element (71) that is oversized relative to the width of the elongated hole (75) engages,
**characterized in that**
the energy absorbing element (73) is connected to the actuating unit (3) via at least one securing element (8), which engages in securing recesses (761, 35) of the energy absorbing element (73) and of the casing tube (32), wherein the energy absorbing element (73) has at least one form-fitting element (78), which engages in a form-fitting manner in a corresponding form-fitting recess (36) in the casing tube (32).

2. The steering column as claimed in claim 1, **characterized in that** the securing element (8) is formed as a plastically deformable, non-detachable connecting element.

3. The steering column as claimed in one of the preceding claims, **characterized in that** at least two securing elements (8) are arranged on a line parallel to the longitudinal axis (L).

4. The steering column as claimed in one of the preceding claims, **characterized in that** the securing elements (8) are arranged on a securing section (76) of the energy absorbing element (73), outside a deformation section (75).

5. The steering column as claimed in one of the preceding claims, **characterized in that** the elongated hole (75) has a radial spacing from the casing tube (32), and at least one securing recess (751) is formed in a securing lug (76) lying against the casing tube (32).

6. The steering column as claimed in one of the preceding claims, **characterized in that** the transmission element (71) and the energy absorbing element (73) are connected to each other via an intended fracture element (79).

7. The steering column as claimed in one of the preceding claims, **characterized in that** the transmission element (71) has an engagement part (72), which can be detachably connected to a locking part (6) that can be supported on the support unit.

8. The steering column as claimed in one of the preceding claims, **characterized in that** a clamping device (4) is arranged on the support unit (2), which fixes the actuating unit (2) relative to the support unit (3), at least in the longitudinal direction, when in the fixing position and, in the release position, enables adjustment of the actuating unit (3) relative to the support unit (2), at least in the longitudinal direction.

9. The steering column as claimed in claim 8, **characterized in that** the clamping device (4) cooperates with the locking unit (6) which, in the fixing position, is connected to the engagement part (72) and, in the release position, is released from the engagement part (72).

10. An actuating unit (3) for a steering column (1) of a motor vehicle, having a steering spindle (31) which is mounted such that it can be rotated about its longitudinal axis (L) in a casing tube (32), and an energy absorbing device (7) which is connected to the casing tube (32), and which has an energy absorbing element (73) fixed to the casing tube (32), wherein the energy absorbing element (73) has an extended hole (75) oriented parallel to the longitudinal axis (L)
**characterized in that**
the energy absorbing element (73) is connected to the casing tube (32) via at least one securing element (8), which engages in a form-fitting manner in securing recesses (761, 36) of the energy absorbing element (73) and of the casing tube (32), wherein the energy absorbing element (73) has at least one form-fitting element (78), which engages in a form-fitting manner in a corresponding form-fitting recess (36) in the casing tube (32).

## Revendications

1. Colonne de direction (1) pour un véhicule automobile, comprenant
une unité de réglage (3) dotée d'un arbre de direction (31) monté pivotant autour de son axe longitudinal (L) dans un tube de protection (32),
une unité de support (2) pouvant être reliée à la carrosserie du véhicule automobile et dans laquelle l'unité de réglage (3) peut être reçue, et
un dispositif d'absorption d'énergie (7) qui présente un élément de transmission (71) pouvant prendre appui sur l'unité de support (2) et un élément d'absorption d'énergie (73) immobilisé sur l'unité de réglage (31), dans laquelle, en cas de collision, l'élément de transmission (71) peut être déplacé, par déformation plastique de l'élément d'absorption d'énergie (73), en direction de l'axe longitudinal (L) par rapport à l'élément d'absorption d'énergie (73), l'élément d'absorption d'énergie (73) présentant un trou oblong (75), orienté en parallèle à l'axe longitudinal (L), dans lequel vient en prise une partie d'élargissement (77) de l'élément de transmission (71) qui est surdimensionné par rapport à la largeur du trou oblong (75),
**caractérisée en ce que** l'élément d'absorption d'énergie (73) est relié à l'unité de réglage (3) par au moins un élément de fixation (8) qui vient en prise dans des évidements de fixation (761, 35) de l'élément d'absorption d'énergie (73) et du tube de protection (32),
l'élément d'absorption d'énergie (73) présentant au moins un élément à complémentarité de forme (78) qui vient en prise par complémentarité de forme dans un évidement à complémentarité de forme (36) correspondant dans le tube de protection (32).

2. Colonne de direction selon la revendication 1, **caractérisée en ce que** l'élément de fixation (8) est réalisé comme un élément de liaison inamovible, plastiquement déformable.

3. Colonne de direction selon l'une quelconque des revendications précédentes, **caractérisée en ce qu'**au moins deux éléments de fixation (8) sont disposés sur une ligne parallèle à l'axe longitudinal (L).

4. Colonne de direction selon l'une quelconque des revendications précédentes, **caractérisée en ce que** les éléments de fixation (8) sont disposés sur une partie de fixation (76) de l'élément d'absorption d'énergie (73) à l'extérieur d'une partie de déformation (75).

5. Colonne de direction selon l'une quelconque des revendications précédentes, **caractérisée en ce que** le trou oblong (75) présente une distance radiale par rapport au tube de protection (32), et au moins un évidement de fixation (751) est réalisé dans une patte de fixation (76) adjacente au tube de protection (32).

6. Colonne de direction selon l'une quelconque des revendications précédentes, **caractérisée en ce que** l'élément de transmission (71) et l'élément d'absorption d'énergie (73) sont reliés l'un à l'autre par un élément destiné à la rupture (79).

7. Colonne de direction selon l'une quelconque des revendications précédentes, **caractérisée en ce que** l'élément de transmission (71) présente une partie de mise en prise (72) qui peut être reliée de manière amovible à une partie d'arrêt (6) pouvant prendre appui sur l'unité de support.

8. Colonne de direction selon l'une quelconque des revendications précédentes, **caractérisée en ce que** sur l'unité de support (2) est disposé un dispositif de serrage (4) qui, dans la position de blocage, immobilise l'unité de réglage (3) par rapport à l'unité de support (3) au moins dans la direction longitudinale, et qui, dans la position de libération, libère un réglage de l'unité de réglage (3) par rapport à l'unité de support (2) au moins dans la direction longitudinale.

9. Colonne de direction selon la revendication 8, **caractérisée en ce que** le dispositif de serrage (4) coopère avec la partie d'arrêt (6) qui est reliée à la partie de mise en prise (72) dans la position de blocage et qui est détachée de la partie de mise en prise (72) dans la position de libération.

10. Unité de réglage (3) pour une colonne de direction (1) d'un véhicule automobile, comprenant un arbre de direction (31) monté pivotant autour de son axe longitudinal (L) dans un tube de protection (32), et un dispositif d'absorption d'énergie (7), relié au tube de protection (32), qui présente un élément d'absorption d'énergie (73) immobilisé sur le tube de protection (32), l'élément d'absorption d'énergie (73) présentant un trou oblong (75) orienté en parallèle à l'axe longitudinal (L),
**caractérisée en ce que** l'élément d'absorption d'énergie (73) est relié au tube de protection (32) par au moins un élément de fixation (8) qui vient en prise par complémentarité de forme dans des évidements de fixation (761, 36) de l'élément d'absorption d'énergie (73) et du tube de protection (32),
l'élément d'absorption d'énergie (73) présentant au moins un élément à complémentarité de forme (78) qui vient en prise par complémentarité de forme dans un évidement à complémentarité de forme (36) correspondant dans le tube de protection (32).
